# FASCICULE DE BREVET EUROPEEN

(11) **EP 2 389 791 B1**
(45) Date de publication et mention de la délivrance du brevet: **17.07.2013**
(21) Numéro de dépôt: 11168026.0
(22) Date de dépôt: 30.05.2011
(51) Int. Cl.: A01B 29/04

(54) **Rouleau et machine de travail du sol comportant un tel rouleau**
Walze und Bodenbearbeitungsmaschine mit einer solchen Walze
Roller and soil working machine equiped with such a roller

(30) Priorité: 31.05.2010 FR 1054211
(43) Date de publication de la demande: 30.11.2011
(73) Titulaire: KUHN S.A., 67700 Saverne (FR)
(72) Inventeur: Teitgen, Hervé, 57370 Phalsbourg (FR); Potier, Philippe, 57370 Veckersviller (FR)

(56) Documents cités:
- EP-A2- 0 189 957
- DE-U1- 8 906 403
- FR-A1- 2 689 722

## Description

La présente invention se rapporte au domaine technique général du machinisme agricole et notamment aux machines agricoles destinées à travailler le sol. L'invention concerne un rouleau comportant une âme cylindrique, susceptible de pivoter autour d'un axe longitudinal, muni de couronnes équidistantes et entre lesquelles sont disposés des décrotteurs, chaque décrotteur se compose d'une plaquette et d'un bras supportant à son extrémité inférieure la plaquette et étant fixé à son extrémité supérieure sur une structure porteuse s'étendant sensiblement parallèlement à l'axe de rotation.

Un tel rouleau est décrit dans le document FR 2 587 166. Il s'agit d'un rouleau packer avec un corps cylindrique. Sur ce corps cylindrique sont soudées de manière espacée et équidistante, des couronnes de dents perpendiculaires à l'axe de rotation du rouleau. Des décrotteurs sont disposés entre ces couronnes successives. Chaque décrotteur est fixé sur un bras qui s'étend vers le haut et qui est disposé à l'arrière par rapport à la direction d'avance. Les bras sont montés sur une structure porteuse s'étendant transversalement compte tenu de la direction d'avance. Comme un tel rouleau possède un grand nombre de décrotteurs, ils sont regroupés en cinq groupes de quatre décrotteurs pour permettre un montage plus rapide. Chaque groupe est assemblé sur la structure porteuse au moyen de deux étriers en forme de U qui entourent la structure porteuse et sont serrés par des écrous. Ces étriers sont disposés à des espacements réguliers autour de la structure porteuse pour un rouleau spécifique. La présence de ces étriers enserrant la structure porteuse et qui sont susceptibles d'être déplacés restreint l'usage de la structure porteuse au simple soutien des décrotteurs. Par ailleurs, le montage des étriers sur la structure porteuse se fait avec un certain jeu et le maintien en position est donné par le serrage des étriers sur la structure porteuse au moyen des écrous. Un serrage excessif pourra entraîner le matage de la structure porteuse.

Un autre rouleau avec les caractéristiques du préambule de la revendication 1 est connu de DE 8 906 403 U.

Sur d'autres rouleaux, les groupes de décrotteurs sont montés à l'aide de boulons passant au travers de la structure porteuse. La structure porteuse est ainsi pourvue de perçages. Dans le cas de décrotteurs rassemblés en groupe par trois ou quatre, chaque groupe est fixé au moyen de deux boulons. Le boulon est constitué d'une vis et d'un écrou et permet d'assembler par serrage les décrotteurs sur la structure porteuse. Les perçages sont réalisés avec des écartements définis en fonction du type de rouleau et de la largeur de travail. Lorsque l'utilisateur souhaite changer de type de rouleau, il devra aussi changer la structure porteuse avec les décrotteurs car les écartements ne sont pas identiques. Avec des perçages, la position latérale des bras sur la structure porteuse est fixe, elle ne peut pas être réglée. Pour l'assemblage le boulon passe de part en part dans la structure porteuse. Avec un tel assemblage sur la structure porteuse en mettant la vis d'un côté et l'écrou de l'autre, la structure porteuse est exclusivement dédiée à supporter un type de décrotteurs. Par ailleurs, ces perçages ont tendance à réduire la résistance de la structure porteuse.

La présente invention a pour but de remédier aux inconvénients précités. Elle doit notamment proposer un rouleau de travail du sol avec une structure porteuse dont la fonction n'est pas réduite au seul soutien des décrotteurs et permettant un réglage de la position latérale des décrotteurs.

A cet effet, une importante caractéristique de l'invention consiste en ce que la structure porteuse présente une zone de fixation pour les bras, cette zone de fixation est limitée à la moitié la plus en arrière de la structure porteuse, vu transversalement à la direction de travail et que dans ladite zone de fixation, ladite structure porteuse comporte deux rainures réalisant une glissière. Grâce à cette caractéristique, la fixation des bras se fait exclusivement dans la moitié arrière de la structure porteuse et par conséquent la moitié avant, affranchi de tout obstacle, peut avoir une fonction de liaison avec la structure du rouleau. La zone de fixation avec la glissière permet un réglage en continu et sans limitation de la position des décrotteurs.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente, en vue de côté, un rouleau de travail du sol selon l'invention,
- la **figure 2** représente une vue arrière en perspective du rouleau de la figure 1,
- la **figure 3** représente une vue arrière en perspective d'un autre rouleau,
- la **figure 4** représente une machine agricole avec un rouleau de la figure 1.

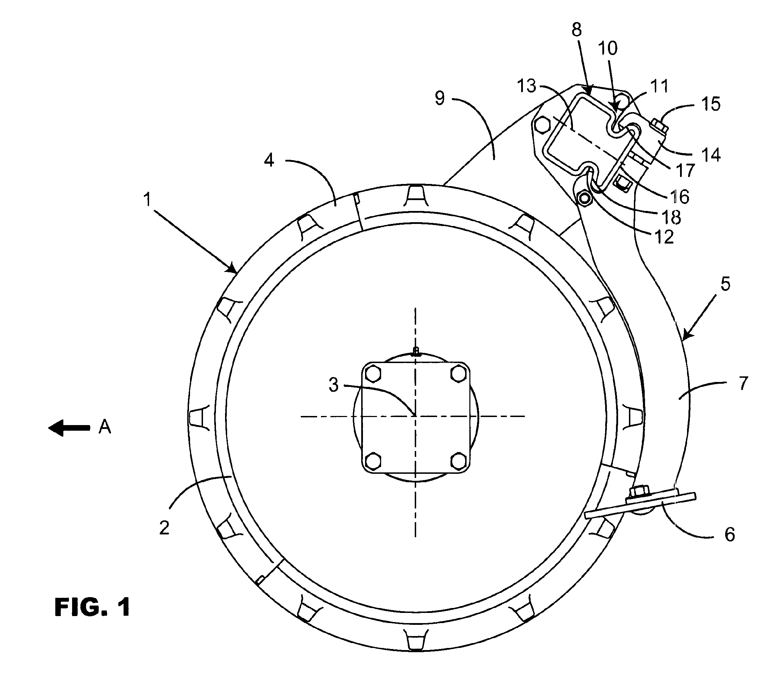

Sur la figure 1, le rouleau de travail du sol (1) comporte une âme sensiblement cylindrique (2) avec un axe longitudinal (3) qui s'étend transversalement et de préférence perpendiculairement à la direction de travail (A). Un tel rouleau (1) a pour fonction de rappuyer le sol et de compléter l'émiettement. Pour cela il est susceptible de pivoter autour de son axe longitudinal (3). Le rouleau (1) est muni de couronnes équidistantes (4) disposées sur l'âme cylindrique (2). L'espace entre les différentes couronnes (4) est sensiblement identique. Les couronnes (4) sont fixées par soudage ou empilement sur la circonférence de l'âme cylindrique (2). Le rouleau (1) est généralement entraîné par le sol. Des décrotteurs (5) sont disposés entre les couronnes (4) successives et ont pour fonction d'éviter qu'une partie de la terre qui a été travaillée par le rouleau (1) n'adhère à son âme cylindrique (2). Le décrotteur (5) se compose d'une plaquette (6) qui s'étend jusque près de l'âme cylindrique (2) et d'un bras (7) qui supporte à son extrémité inférieure la plaquette (6) et qui est fixé à son extrémité supérieure sur une structure porteuse (8). Le petit côté de la plaquette (6), de forme rectangulaire, qui s'étend sensiblement sur tout l'espacement entre deux couronnes (4), constitue la partie active de la plaquette (6). Pour un fonctionnement efficace, il est préférable que la position de la plaquette (6) soit réglable par rapport à l'âme cylindrique (2). La structure porteuse (8) s'étend sensiblement parallèlement à l'axe longitudinal (3). La structure porteuse (8) comporte à chaque extrémité un bras de liaison (9) à l'aide duquel elle est montée sur l'âme cylindrique (2).

Selon une importante caractéristique de l'invention, la structure porteuse (8) présente une zone de fixation (10) destinée à recevoir les bras (7), cette zone de fixation (10) est limitée à la moitié la plus en arrière de la structure porteuse (8), vu transversalement à la direction d'avance au travail (A). Grâce à cette caractéristique, la fixation des bras (7) se fait exclusivement dans la moitié arrière de la structure porteuse (8) et par conséquent la moitié avant est libre de tout moyen de fixation. La moitié avant peut ainsi être utilisée dans un autre but et avoir une fonction de liaison avec la structure du rouleau (1).

Selon une autre importante caractéristique de l'invention, ladite structure porteuse (8) comporte deux rainures (11, 12) réalisant une glissière dans ladite zone de fixation (10). Grâce à cette caractéristique, le réglage de la position des bras (7) se fait en continu et sans limitation.

A la lumière de la figure 1, la structure porteuse (8) est symétrique. La structure porteuse (8) comporte dans sa moitié la plus en arrière notamment dans la zone de fixation (10), une rainure supérieure (11) et une rainure inférieure (12). Ces deux rainures (11, 12) sont disposées symétriquement au-dessus respectivement en dessous par rapport au plan de symétrie (13). D'une manière particulièrement avantageuse, le plan de symétrie (13) de la structure porteuse (8) est orienté par rapport à l'horizontale, direction sensiblement parallèle à la direction d'avance au travail (A), de manière à favoriser un intervalle important entre les couronnes (4) et la structure porteuse (8) pour le passage de la terre. L'angle d'inclinaison est compris entre 10° et 70° et d'une manière avantageuse entre 30° et 60°. L'orientation de la structure porteuse (8) par rapport à l'horizontale est en fonction du type de rouleau, notamment en fonction des diamètres de l'âme cylindrique (2) et des couronnes (4). Dans une alternative, le plan de symétrie (13) est sensiblement horizontal.

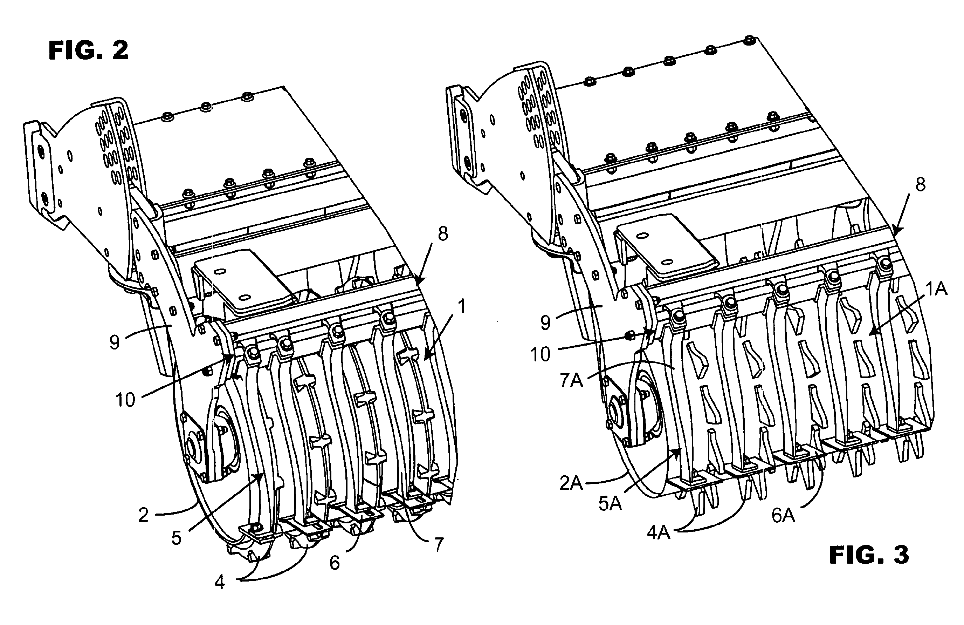

La figure 2 est une vue arrière en perspective d'une partie d'un rouleau. D'après cette figure, les rainures (11, 12) s'étendent, de préférence, sur toute la longueur de la structure porteuse (8). Selon une alternative non représentée, les rainures (11, 12) s'étendent seulement sur une partie de la longueur de la structure porteuse (8). Ces deux rainures (11, 12) réalisent avantageusement une glissière permettant un réglage en continu et sans limitation le long de la glissière du décrotteur (5). Grâce à la glissière, la position latérale de chaque bras (7) de décrotteur (5) peut être adaptée en fonction de la position et de l'écartement des couronnes (4) successives sur l'âme cylindrique (2). Une telle adaptation permet d'utiliser la structure porteuse (8) selon l'invention pour les différents types de rouleaux existants qui nécessitent un nettoyage de l'âme cylindrique (2).

La figure 3 représente un rouleau d'un autre type. Il s'agit d'un rouleau packer (1A), l'âme cylindrique (2A) comporte des dents raccordées l'une à l'autre de manière à former une couronne de dents (4A) sensiblement équidistantes. Les couronnes de dents (4A) ont pour fonction d'entraîner le rouleau en rotation. Un tel rouleau (1A) comporte généralement un nombre important de couronnes de dents (4A) ayant une épaisseur réduite. Ce rouleau (1A) présente un décrotteur (5A) adapté au diamètre de l'âme cylindrique (2A) avec des bras (7A) répartis en fonction de la position des couronnes de dents (4A) et des plaquettes (6A) de largeur adaptée.

Un autre rouleau, telle que celui représenté à la figure 2, a pour fonction de réaliser plutôt des sillons dans le sol. Pour cela, l'épaisseur des couronnes est plus importante. Ce rouleau présente des couronnes métalliques réalisées à partir de segments qui sont assemblés les uns aux autres. D'autres rouleaux, réalisant des sillons dans la terre, présentent des couronnes en caoutchouc.

Le nombre et la forme des décrotteurs (5 ; 5A) varient donc en fonction du type de rouleau pour s'adapter à ce dernier. La forme du bras (7 ; 7A) est adaptée par rapport au diamètre de l'âme cylindrique (2 ; 2A) pour garantir un travail efficace de la plaquette (6 ; 6A). La largeur de la plaquette (6 ; 6A) est adaptée en fonction de la largeur à décrotter entre les couronnes (4 ; 4A).

D'une manière avantageuse, la glissière est prévue dans le profil de la structure porteuse (8). La structure porteuse (8) avec les deux rainures (11, 12) est mise en oeuvre par une opération de profilage à froid. Le profilage à froid est un processus de mise en forme en continu qui permet, à partir de tôles planes en feuille ou en bobine, d'obtenir des produits de section constante. Le feuillard subit des déformations progressives jusqu'à obtenir les angles et la forme souhaités. Grâce au profilage à froid, la forme est obtenue sans que soit modifiée son épaisseur initiale. La structure porteuse (8) est un profil à section fermée réalisé par profilage avec une soudure en continu. La glissière profilée dans la tôle est solide et indéformable. La structure porteuse (8) dotée des rainures longitudinales (11, 12) permet d'augmenter significativement son inertie en flexion. Avec un tel procédé, la profondeur des rainures (11, 12) est assurée avec précision. Les rainures (11, 12) présentent avantageusement une forme sensiblement arrondie. Une autre forme pour les rainures (11, 12) reste également dans le champ de protection.

Chaque bras (7) est monté dans la zone de fixation (10) au moyen d'un crochet (14) et d'un moyen de fixation (15). Ainsi chaque bras (7) est maintenu sur la glissière. La face arrière (16) de la structure porteuse (8) réalise la face de guidage de la glissière. Cette face arrière (16) relie les deux rainures (11, 12). Ainsi l'extrémité supérieure du bras (7) s'appuie contre cette face arrière (16) pour le positionnement du décrotteur (5) dans la direction d'avance au travail (A). Pour la fixation du bras (7) sur la structure porteuse (8), l'extrémité supérieure du bras (7) est également destinée à venir dans la rainure inférieure (12) et le crochet (14) est destiné à s'accrocher dans la rainure supérieure (11). Le crochet (14) s'appuie aussi contre la face arrière (16). L'extrémité supérieure du bras (7) présente une forme complémentaire à la rainure inférieure (12) et le crochet (14) présente une forme complémentaire à la rainure supérieure (11). Le crochet (14) vient en regard de la partie supérieure du bras (7) pour pincer la glissière dans la zone de fixation (10). Pour un bridage efficace, chaque rainure (11, 12) présente une face inclinée (17, 18) par rapport à la verticale. Le bras (7) et le crochet (14) présentent donc une face inclinée respective complémentaire. Le crochet (14) et le bras (7) sont alors serrés via le moyen de fixation (15). Les deux faces inclinées (17, 18) ensemble forment un Vé dont l'ouverture s'étend vers l'arrière compte tenu de la direction d'avance au travail (A). Ces faces inclinées (17, 18) permettent un centrage automatique de la position en hauteur du décrotteur (5) sur la structure porteuse (8). Une telle fixation n'implique donc pas de perçages dans la structure porteuse (8), sa résistance n'est donc pas réduite. Ce bridage permet avantageusement de compenser un jeu dans les formes complémentaires du bras (7) et/ou du crochet (14) sans détériorer le positionnement initial du décrotteur (5) sur la structure porteuse (8). Ce bridage est par conséquent rapide et durable dans le temps. Il permet aussi un réglage de la position du décrotteur (5) le long de la structure porteuse (8). Grâce aux faces inclinées (17, 18), on obtient lors du serrage du moyen de fixation (15) un effort de serrage combiné qui se décompose en un effort sensiblement horizontal et en un effort sensiblement vertical. L'effort horizontal permet de bloquer par adhérence le bras (7) dans toutes les directions. C'est grâce au couple de serrage du moyen de fixation (15), que le décrotteur (5) est bridé dans une position fixe le long de la structure porteuse (8). Avec un tel bridage, le décrotteur (5) est bridé sur la structure porteuse (8) de manière efficace et garantie dans le temps. La position du décrotteur (5) sur la structure porteuse (8) peut être modifiée aisément par desserrage du moyen de fixation (15).

Dans un exemple de réalisation, le moyen de fixation (15) est un boulon composé d'une vis et d'un écrou. L'écrou est noyé dans l'extrémité supérieure du bras (7) et d'une manière avantageuse le logement destiné à recevoir l'écrou permet de le bloquer en rotation.

Grâce à cette glissière dans la zone de fixation (10) disposée dans la moitié arrière de la structure porteuse (8), une fixation individuelle de chaque décrotteur (5) peut être envisagée. Pour un démontage et un réglage plus rapide, une fixation des décrotteurs en groupe est également possible. Dans ce cas, seuls les bras (7) disposés à l'extérieur présentent une forme complémentaire à la rainure inférieure (12).

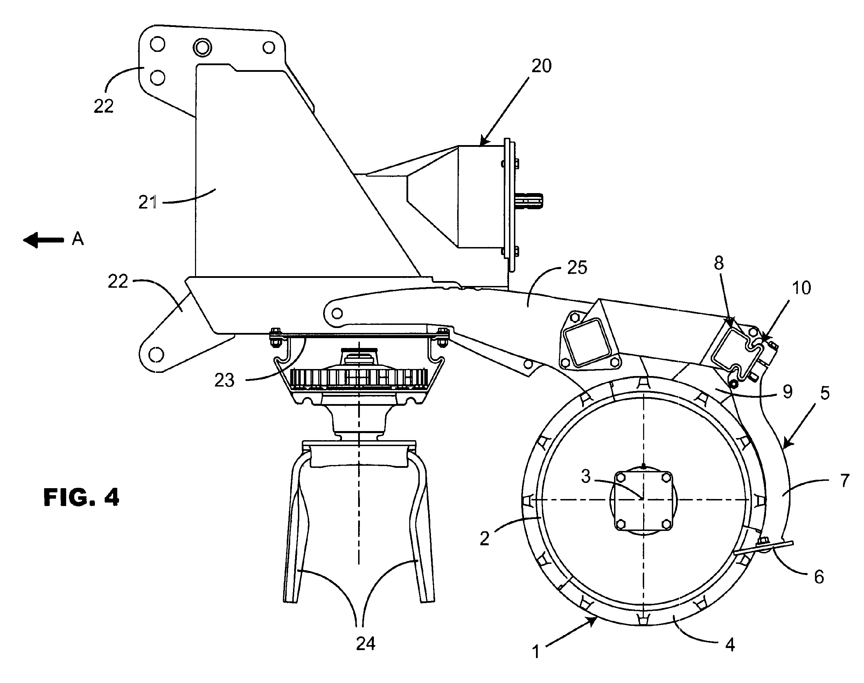

La figure 4 représente une machine agricole de travail du sol (20), notamment pour la préparation d'un lit de semences. La machine (20), représentée, est une herse rotative destinée à la préparation de lit de semences. Afin de pouvoir être déplacée, la machine (20) comporte un cadre (21) pourvu d'un dispositif d'attelage trois points (22) à un tracteur (non représenté). Elle comporte un carter (23) s'étendant transversalement à la direction d'avance (A) pour le travail. Le carter (23) supporte des outils de travail (24) qui sont montés radialement sur des rotors susceptibles de tourner autour d'un axe respectif sensiblement vertical. A l'arrière de cette machine (20) est prévu un rouleau (1) selon l'invention. Ce rouleau (1) a pour fonction le contrôle de la profondeur de travail des outils. Le rouleau (1) est relié au cadre (21) au moyen de tirants (25). La glissière longitudinale présente au moins une rainure, une portion inclinée par rapport à la verticale.

Un rouleau selon l'invention pourra être monté sur différents types de machines de travail du sol par exemple une fraise rotative dont l'axe horizontal est entraîné. Un tel rouleau peut également équiper des machines de travail du sol non animées telles que des déchaumeurs ou autres.

La machine agricole conforme à l'invention peut être une machine rigide ou une machine repliable en au moins deux parties.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Rouleau (1 ; 1a) comportant une âme cylindrique (2 ; 2A), susceptible de pivoter autour d'un axe longitudinal (3), muni de couronnes (4 ; 4A) équidistantes et entre lesquelles sont disposés des décrotteurs (5 ; 5A), chaque décrotteur (5 ; 5A) se compose d'une plaquette (6 ; 6A) et d'un bras (7 ; 7A) supportant à son extrémité inférieure la plaquette (6 ; 6A) et étant fixé à son extrémité supérieure sur une structure porteuse (8) s'étendant sensiblement parallèlement à l'axe longitudinal (3), ladite structure porteuse (8) présentant une zone de fixation (10) destinée à recevoir lesdits bras (7 ; 7A), cette zone de fixation (10) est limitée à la moitié la plus en arrière de ladite structure porteuse (8), vu transversalement à la direction de travail (A) et ***caractérisé en ce que*** dans ladite zone de fixation (10), ladite structure porteuse (8) comporte deux rainures (11, 12) réalisant une glissière.

2. Rouleau selon la revendication 1, ***caractérisé en ce que*** la rainure supérieure (11) et la rainure inférieure (12) sont disposées symétriquement par rapport au plan de symétrie (13) de ladite structure porteuse (8).

3. Rouleau selon la revendication 1 ou 2, ***caractérisé en ce que*** ledit plan de symétrie (13) est orienté par rapport à l'horizontale.

4. Rouleau selon l'une quelconque des revendications 1 à 3, ***caractérisé en ce que*** le profil de ladite structure porteuse (8) intègre lesdites rainures (11, 12).

5. Rouleau selon l'une quelconque des revendications 1 à 4, ***caractérisé en ce* que** chaque rainure (11, 12) présente une face inclinée (17, 18) formant ensemble un Vé dont l'ouverture est dirigée vers l'arrière compte tenu de la direction d'avance au travail (A).

6. Rouleau selon l'une quelconque des revendications 1 à 5, ***caractérisé en ce* que** ladite structure porteuse (8) est mise en oeuvre par une opération de profilage à froid.

7. Rouleau selon l'une quelconque des revendications 1 à 6, ***caractérisé en ce que*** lesdites rainures (11, 12) présentent une forme sensiblement arrondie.

8. Rouleau selon l'une quelconque des revendications 1 à 7, ***caractérisé en ce que*** chaque bras (7 ; 7A) est monté dans ladite zone de fixation (10) au moyen d'un crochet (14) et d'un moyen de fixation (15).

9. Rouleau cylindrique selon l'une quelconque des revendications 1 à 8, ***caractérisé en ce que*** ledit crochet (14) présente une forme complémentaire à ladite rainure supérieure (11) et que l'extrémité supérieure dudit bras (7 ; 7A) présente une forme complémentaire à ladite rainure inférieure (12).

10. Machine agricole de travail du sol comportant un rouleau conforme à l'une quelconque des revendications 1 à 9.

## Patentansprüche

1. Walze (1; 1A) mit einem zylindrischen Kern (2; 2A), der um eine Längsachse (3) schwenken kann, wobei die Walze (1; 1A) mit gleichweit entfernten Kränzen (4; 4A) versehen ist, zwischen welchen Reiniger (5; 5A) angeordnet sind, wobei jeder Reiniger (5; 5A) aus einem Plättchen (6; 6A) und einem Arm (7; 7A) besteht, der an seinem unteren Ende das Plättchen (6; 6A) trägt und an seinem oberen Ende an einer Tragstruktur (8) befestigt ist, die sich im Wesentlichen parallel zur Längsachse (3) erstreckt, wobei die Tragstruktur (8) eine Befestigungszone (10) aufweist, die dazu bestimmt ist, die Arme (7; 7A) aufzunehmen, wobei diese Befestigungszone (10) auf die hinterste Hälfte der Tragstruktur (8) in Arbeitsrichtung (A) gesehen beschränkt ist, ***dadurch gekennzeichnet,* dass** die Tragstruktur (8) in der Befestigungszone (10) zwei Nuten (11, 12) umfasst, die eine Gleitschiene bilden.

2. Walze nach Anspruch 1, ***dadurch gekennzeichnet,* dass** die obere Nut (11) und die untere Nut (12) symmetrisch zur Symmetrieebene (13) der Tragstruktur (8) angeordnet sind.

3. Walze nach Anspruch 1 oder 2, ***dadurch gekennzeichnet,* dass** die Symmetrieebene (13) zur Horizontalen ausgerichtet ist.

4. Walze nach irgend einem der Ansprüche 1 bis 3, ***dadurch gekennzeichnet,* dass** das Profil der Tragstruktur (8) die Nuten (11, 12) einbezieht.

5. Walze nach irgend einem der Ansprüche 1 bis 4, ***dadurch gekennzeichnet,* dass** jede Nut (11, 12) eine geneigte Fläche (17, 18) aufweist, die gemeinsam ein V bilden, dessen Öffnung nach hinten bei Betrachtung der Arbeitsvorschubrichtung (A) gerichtet ist.

6. Walze nach irgend einem der Ansprüche 1 bis 5, ***dadurch gekennzeichnet,* dass** die Tragstruktur (8) durch ein Kaltprofilierensverfahren eingesetzt wird.

7. Walze nach irgend einem der Ansprüche 1 bis 6, ***dadurch gekennzeichnet,* dass** die Nuten (11, 12) eine im Wesentlichen abgerundete Form aufweisen.

8. Walze nach irgend einem der Ansprüche 1 bis 7, ***dadurch gekennzeichnet,* dass** jeder Arm (7; 7A) in der Befestigungszone (10) mittels eines Hakens (14) und eines Befestigungsmittels (15) befestigt ist.

9. Zylindrische Walze nach irgend einem der Ansprüche 1 bis 8, ***dadurch gekennzeichnet,* dass** der Haken (14) eine zu der oberen Nut (11) komplementäre Form aufweist, und dass das obere Ende des Arms (7; 7A) eine zu der unteren Nut (12) komplementäre Form aufweist.

10. Landwirtschaftliche Bodenbearbeitungsmaschine mit einer Walze nach irgend einem der Ansprüche 1 bis 9.

## Claims

1. Roller (1; 1A) comprising a cylindrical core (2; 2A) which can pivot about a longitudinal axis (3) and is provided with equidistant crowns (4; 4A) between which scrapers (5; 5A) are arranged, each scraper (5; 5A) is composed of a small plate (6; 6A) and an arm (7; 7A) supporting at its lower end the small plate (6; 6A) and being fixed at its upper end on a carrying structure (8) extending substantially parallel to the longitudinal axis (3), the said carrying structure (8) having a fastening zone (10) intended to receive the said arms (7; 7A), this fastening zone (10) is limited to the half furthest at the rear of the said carrying structure (8), viewed transversely to the direction of work (A), and ***characterized in* that** in the said fastening zone (10), the said carrying structure (8) comprises two grooves (11, 12) creating a slide.

2. Roller according to Claim 1, ***characterized in* that** the upper groove (11) and the lower groove (12) are arranged symmetrically with respect to the plane of symmetry (13) of the said carrying structure (8).

3. Roller according to Claim 1 or 2, ***characterized in* that** the said plane of symmetry (13) is oriented with respect to the horizontal.

4. Roller according to any one of Claims 1 to 3, ***characterized in* that** the profile of the said carrying structure (8) integrates the said grooves (11, 12).

5. Roller according to any one of Claims 1 to 4, ***characterized in* that** each groove (11, 12) has an inclined face (17, 18) forming together a V, the opening of which is directed towards the rear, taking into account the direction of advance during working (A).

6. Roller according to any one of Claims 1 to 5, ***characterized in* that** the said carrying structure (8) is implemented by a cold profiling operation.

7. Roller according to any one of Claims 1 to 6, ***characterized in* that** the said grooves (11, 12) have a substantially rounded shape.

8. Roller according to any one of Claims 1 to 7, ***characterized in* that** each arm (7; 7A) is mounted in the said fastening zone (10) by means of a hook (14) and by a fastening means (15).

9. Cylindrical roller according to any one of Claims 1 to 8, ***characterized in* that** the said hook (14) has a complementary shape to the said upper groove (11) and that the upper end of the said arm (7; 7A) has a complementary shape to the said lower groove (12).

10. Agricultural soil-working machine comprising a roller according to any one of Claims 1 to 9.
